(19) **Europäisches Patentamt European Patent Office Office européen des brevets**

(11) **EP 4 238 764 B1**

(12) **EUROPEAN PATENT SPECIFICATION**

(45) Date of publication and mention of the grant of the patent:
**21.01.2026 Bulletin 2026/04**

(21) Application number: **21903034.3**

(22) Date of filing: **22.10.2021**

(51) International Patent Classification (IPC):
*B32B 27/30* (2006.01)    *B32B 27/38* (2006.01)
*B32B 27/40* (2006.01)    *B32B 27/42* (2006.01)
*C09D 191/06* (2006.01)    *C09D 201/00* (2006.01)
*B32B 15/08* (2006.01)    *C23C 26/00* (2006.01)

(52) Cooperative Patent Classification (CPC):
(C-Sets available)
**C09D 191/06; C09D 123/04; C09D 133/08;**
B05D 2202/10; C08L 91/06      (Cont.)

(86) International application number:
**PCT/JP2021/039056**

(87) International publication number:
**WO 2022/123930 (16.06.2022 Gazette 2022/24)**

(54) **STEEL SHEET AND METHOD FOR MANUFACTURING THE SAME**

STAHLBLECH UND VERFAHREN ZUR HERSTELLUNG DAVON

TÔLE D'ACIER ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2020 JP 2020204278**

(43) Date of publication of application:
**06.09.2023 Bulletin 2023/36**

(73) Proprietor: **JFE Steel Corporation Tokyo 100-0011 (JP)**

(72) Inventors:
• **FURUYA Shinichi**
**Tokyo 100-0011 (JP)**
• **AOYAMA Tomohiro**
**Tokyo 100-0011 (JP)**
• **KOIBUCHI Shun**
**Tokyo 100-0011 (JP)**
• **MATSUDA Takeshi**
**Tokyo 100-0011 (JP)**

(74) Representative: **Haseltine Lake Kempner LLP One Portwall Square Portwall Lane Bristol BS1 6BH (GB)**

(56) References cited:
EP-A1- 3 385 344    JP-A- 2000 167 981
JP-A- 2004 052 072    JP-A- 2005 226 121
JP-A- 2013 094 784    JP-A- 2017 105 986
JP-A- H0 577 357    JP-A- H09 170 059
JP-B1- 6 682 691

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 133/08, C08L 91/06**

**Description**

Technical Field

The present invention relates to a steel sheet excellent in terms of slidability when press forming is performed and a method for manufacturing the steel sheet, and, in particular, to a steel sheet having a lubrication film excellent in terms of formability even when severe drawing is performed with a large working depth and a large drawing ratio and a method for manufacturing the steel sheet.

Background Art

Cold rolled steel sheets and hot rolled steel sheets, which have a wide field of application mainly including automotive body applications, are generally subjected to press forming when used in such applications. Nowadays, since there are demands for integrated parts, which are intended to reduce the number of processes, and improvement in design effect, it is necessary to realize complex forming at a higher level.

In the case where an attempt is made to realize complex press forming at a higher level, there is a risk of significant negative effects on the productivity of automobiles due to steel sheet fracture caused by the degree of forming which exceeds the capacity of the steel sheet, die galling occurring when continuous press forming is performed, or the like.

Examples of a method for improving the press formability of cold rolled steel sheets and hot rolled steel sheets include a method involving the surface treatment of a die. Although this method is widely used, in the case of this method, it is not possible to adjust the die after surface treatment has been performed. In addition, there is also a problem of high cost. Therefore, there is a strong demand for improving the press formability of a steel sheet itself.

Examples of a method for improving press formability without performing surface treatment on a die include a method utilizing high-viscosity lubrication oil. However, in the case of this method, since there may be a case of poor degreasing after press forming, there is a risk of a deterioration in coatability.

Therefore, as a technique for realizing press forming without utilizing the surface treatment of a die or high-viscosity lubrication oil, investigations are being conducted regarding various types of steel sheets having a lubrication-treated surface.

EP 3 385 344 A1 discloses a steel sheet coated with a film comprising an acrylic resin and 17-20 wt% (exemplified values) of a polyethylene wax having a melting temperature (Tm) of 120-145°C and an average particle size less than 1,0 $\mu$m. The coating weight per side (W) of the film is 0,5-2,5 g/m2.

Patent Literature 1 describes a metal plate coated with a lubrication film including solid lubricants protruding from the surface of a resin film with a protruding height of 0.01 $\mu$m to 1.5 um.

Patent Literature 2 describes a lubrication-surface treated metal product coated with a film in which a polyurethane resin contains a lubricant, with a film thickness of 0.5 $\mu$m to 5$\mu$m, and having excellent press formability.

Patent Literature 3 describes a technique for forming an alkali-soluble organic film in which a lubricant is added to an epoxy resin on the surface of a steel sheet.

Citation List

Patent Literature

PTL 1: Japanese Unexamined Patent Application Publication No. 10-52881
PTL 2: Japanese Unexamined Patent Application Publication No. 2000-309747
PTL 3: Japanese Unexamined Patent Application Publication No. 2000-167981

Summary of Invention

Technical Problem

However, in the case of Patent Literature 1 to Patent Literature 3, although a lubricating capability was achieved due to the lubricating effect of the added lubricants or the like, press formability was not always sufficient when complex forming was performed. In particular, in the case where the surface roughness of a steel sheet varied, it was not possible to stably achieve good press formability.

The present invention has been completed in view of the situation described above, and an object of the present invention is to provide a steel sheet that is to be subjected to complex forming in which press forming is difficult and that has a lubrication film, the steel sheet having low sliding resistance in a portion at risk of cracking when press forming is performed, excellent press formability in a portion in which die galling is considered to occur due to high surface pressure, and excellent press formability, in particular, when the surface roughness of the steel sheet varies over a wide range, and is to provide a method for manufacturing the steel sheet.

In addition, in the case where the steel sheet is used as an automobile steel sheet, the steel sheet is also required to have sufficient film removability in an alkali degreasing process in a coating process. In the case of such an application, a further object of the present invention is to provide the steel sheet further having good film removability and a method for manufacturing the steel sheet.

Solution to Problem

The present inventors diligently conducted investigations to solve the problems described above and, as a result, found that it is possible to solve the problems described above by forming an organic resin film containing a polyolefin wax having a melting temperature of 120°C or higher and 140°C or lower and an average particle size of 3.0 $\mu$m or less on the surface of a steel sheet and by controlling the surface roughness of the steel sheet and the coating weight of the film, thereby markedly improving press formability.

The present invention has been completed on the basis of the findings described above, and the subject matter of the present invention is defined in independent claims 1 and **8.** Further embodiments are defined in dependent claims **2-7.**

Advantageous Effects of Invention

According to the present invention, it is possible to provide a steel sheet that is to be subjected to complex forming in which press forming is difficult and that has a lubrication film, the steel sheet having low sliding resistance in a portion at risk of cracking when press forming is performed, excellent press formability in a portion in which die galling is considered to occur due to high surface pressure, and excellent press formability, in particular, when the surface roughness of the steel sheet varies over a wide range, and it is possible to provide a method for manufacturing the steel sheet. In addition, in the case where the steel sheet is used as an automobile steel sheet, it is possible to provide the steel sheet further having good film removability and to provide a method for manufacturing the steel sheet.

Incidentally, in the present invention, the meaning of the term "steel sheet" includes a cold rolled steel sheet and a hot rolled steel sheet. In addition, in the present invention, the expression "high strength" denotes the assumption that tensile strength (TS) is 440 MPa or higher, and the expression "comparatively low strength" denotes the assumption that TS is lower than 440 MPa.

Brief Description of Drawings

[Fig. 1] Fig. 1 is a schematic front view illustrating a friction coefficient measurement apparatus.

[Fig. 2] Fig. 2 is a schematic perspective view illustrating the shape and dimensions of the bead in Fig. 1 in EXAMPLE 1.

[Fig. 3] Fig. 3 is a diagram illustrating relationships between film thickness and friction coefficient for various surface roughness of a steel sheet regarding the paint within the scope of the present invention.

[Fig. 4] Fig. 4 is a diagram illustrating relationships between film thickness and friction coefficient for various surface roughness of a steel sheet regarding the paint outside the scope of the present invention.

[Fig. 5] Fig. 5 is a schematic perspective view illustrating the shape and dimensions of the bead in Fig. 1 in EXAMPLE 2.

Description of Embodiments

Hereafter, embodiments of the present invention will be described.

In the present invention, a steel sheet has a film containing an organic resin and a wax on at least one surface thereof, the wax is a polyolefin wax having a melting temperature of 120°C or higher and 140°C or lower and an average particle size of 3.0 $\mu$m or less, and the proportion of the wax in the film is 10 mass% or more. Moreover, in the present invention, the coating weight per side W (g/m$^2$) of the film and the arithmetic average roughness Ra ($\mu$m) of the steel sheet before the film is formed satisfy relational expression (1) below.

$$W \geq 0.12 \times Ra^2 + 0.2 \quad \cdots \quad (1)$$

There is no limitation on the wax used in the present invention as long as the wax is a polyolefin wax having a melting temperature of 120°C or higher and 140°C or lower and an average particle size of 3.0 μm or less.

The reason why a polyolefin wax is used as the wax is because, since it has low surface energy and a self-lubricating capability, a good lubricating capability is achieved. In addition, it is comparatively easy to adjust the melting temperature of polyolefins to be 120°C or higher and 140°C or lower by controlling the density and the molecular weight thereof.

In the case where the melting temperature is 120°C or higher and 140°C or lower, since the polyolefin wax comes into a semi-molten state due to a sliding action when press forming is performed, it is possible for lubrication film constituents mixed with the organic resin to coat the surface of the die, thereby inhibiting direct contact between the die and the steel sheet, which results in an excellent lubricating effect being realized in addition to the self-lubricating capability of the polyolefin wax. In the case where the melting temperature is lower than 120°C, since the wax is completely melted due to frictional heat caused by a sliding action when press forming is performed, it is not possible to realize a sufficient lubricating effect of the wax itself, and it is not possible to realize the above-described effect of coating the die. In addition, in the case where the melting temperature is higher than 140°C, since the wax is not melted when sliding is performed, it is not possible to realize a sufficient lubricating effect, and it is not possible to realize the effect of coating the die.

In the case where the melting temperature of the wax is 120°C or higher and 140°C or lower, it is considered that, since the wax in the film efficiently adheres to the die in a sliding state when press forming is performed, the wax is less likely to be removed, which results in a high lubricating effect being realized. In the case where the melting temperature is lower than 120°C, even when the film adheres to the die, since there is a decrease in adhesion, the film tends to be removed when sliding is performed. In the case where the melting temperature is higher than 140°C, the film is less likely to adhere to the die. Moreover, it is preferable that the melting temperature of the wax be 125°C or higher. Moreover, it is preferable that the melting temperature of the wax be 135°C or lower.

Here, the term "melting temperature" with respect to the wax denotes the melting temperature measured in accordance with JIS K 7121:1987 "Testing Methods for Transition Temperatures of Plastics".

In the case where the average particle size of the wax is more than 3.0 μm, since the wax is less likely to be mixed with the organic resin when sliding is performed, it is not possible to realize the above-described effect of coating the die, which results in a sufficient lubricating capability not being achieved. It is preferable that the average particle size of the wax be 1.5 μm or less. It is more preferable that the average particle size of the wax be 0.5 μm or less or even more preferably 0.3 μm or less.

It is preferable that the average particle size be 0.01 μm or more. In the case where the average particle size of the wax is less than 0.01 μm, since the wax tends to be dissolved in the lubrication oil when sliding is performed, there may be a case where it is not possible to realize a sufficient effect of improving a lubricating capability. In addition, since the wax tends to be aggregated in the paint used for forming the film, there is a deterioration in paint stability. It is more preferable that the average particle size of the wax be 0.03 μm or more. In consideration of mixability with the organic resin described above, it is preferable that the average particle size of the wax be 0.01 μm or more and 0.5 μm or less.

The above-described term "average particle size" denotes the median diameter of a volume average particle diameter, which is determined by using a laser diffraction/scattering method. For example, by using a Partica (registered trademark) LA-960V2 (produced by HORIBA, Ltd.) laser scattering particle size distribution analyzer, and by observing a sample diluted with pure water, it is possible to determine the average particle size.

Since the type of the polyolefin wax with which it is most possible to achieve a lubricating effect is polyethylene wax, it is preferable that polyethylene wax be used.

The mass fraction of the wax in the film is set to be 10 mass% or more. In the case where the mass fraction is less than 10 mass%, it is not possible to achieve a sufficient lubricating effect. In the case where the mass fraction of the wax in the film is 15 mass% or more, it is possible to achieve an especially good lubricating effect. In addition, it is preferable that the mass fraction of the wax in the film be less than 50 mass%. In the case where the mass fraction is 50 mass% or more, since the wax tends to be removed due to an insufficient amount of base resin constituent, there is a deterioration in adhesiveness to the steel sheet, which may result in the wax not being able to stably exist in the form of a film. In addition, in the case where the steel sheet is used as an automobile steel sheet, since there may be a case where it is not possible to achieve a sufficient degreasing capability in an alkali degreasing process in a coating process, and since, even when an alkali-soluble organic resin is used, the film is retained due to the film not being sufficiently removed in an alkali degreasing process, there may be a deterioration in coatability. It is more preferable that the mass fraction of the wax in the film be 30 mass% or less.

Here, the expression "mass fraction of the wax in the film" denotes the ratio of the mass of the solid content of the wax in the film to the sum of the mass of the solid content of the organic resin in the film and the mass of the solid content of the wax in the film.

Regarding a specific measuring method, test samples for which the coating weights of the organic resin and the wax on the steel sheet are known are prepared, an infrared absorption spectrum is measured by using an FT-IR measurement apparatus, and a coating weight calibration curve is produced for each of the organic resin and the wax from a respective one of the peak intensities related to the organic resin and the wax. Subsequently, the infrared absorption spectrum of a steel sheet coated with a lubrication film, which is a measurement object, is measured, thereby determining the mass fraction of the wax in the film by determining the coating weights of the resin and the wax from the respective calibration curves.

In the present invention, the organic resin functions as a binder holding the wax on the surface of the steel sheet. In the case where an inorganic binder is used instead of the organic resin, since there is decreased affinity for polyolefins, the above-described sliding effect due to the mixture of the wax and the organic resin coating the die, which is formed when sliding is performed, is not realized. Examples of the organic resin which may be used include an acryl-based resin, an epoxy-based resin, a urethane-based resin, a phenol-based resin, a vinyl acetate-based resin, and a polyester-based resin.

Examples of the acryl-based resin which is used in the present invention include polymers or copolymers, or their derivatives such as sodium salts, potassium salts, ammonium salts, and amine salts, formed of one, two, or more selected from unsaturated monocarboxylic acids, which are formed by adding one carboxy group to the molecule of each of acrylic acid, methacrylic acid, or the like, esters of the unsaturated monocarboxylic acids described above, and styrene.

In the case of an acryl-based resin formed of a monomer of a fatty acid having two or more carboxy groups in a molecule, there is a risk of a deterioration in coating stability. Therefore, in the present invention, an acryl-based resin formed of a monomer of a fatty acid or fatty acid ester having one carboxy group in a molecule is used.

Although there is no particular limitation on the epoxy-based resin, examples of the epoxy-based resin include a bisphenol A-type epoxy resin, a bisphenol F-type epoxy resin, a novolac-type epoxy resin, and the like.

Although there is no particular limitation on the urethane-based resin, it is preferable that a carboxy group exist in a molecule.

Although there is no particular limitation on the phenol-based resin, it is preferable that the phenol-based resin be a resol-based phenol resin, which is soluble or dispersible in an aqueous solvent.

Although there is no particular limitation on the vinyl acetate-based resin, it is preferable that a polyvinyl acetate be used.

Although there is no particular limitation on the polyester-based resin, it is preferable that a polyester-based resin be a polyester resin containing a monomer having a carboxy group as a constituent.

In addition, an acryl-based resin, an epoxy-based resin, a urethane-based resin, a phenol-based resin, a vinyl acetate-based resin, and a polyester-based resin described above may be used in such a manner that two or more of these resins are mixed. Moreover, by using such organic resins which are alkali-soluble, since it is possible to remove the film by performing alkaline degreasing in a coating process, there is an improvement in coatability thereafter.

In the present invention, as constituents other than an organic resin and a wax, a surface-conditioning agent, a defoaming agent, and a dispersing agent may be added. In addition, an antirust agent for improving an antirust capability may be added.

Regarding conditions under which the film described above is formed on the surface of a steel sheet in the present invention, the present inventors formed films whose coating weights varied over a wide range on the surface of steel sheets whose surface roughness varied over a wide range, evaluated press formability, and, as a result, found that it is possible to stably achieve good press formability only when a specified relational expression for the surface roughness of the steel sheet and the coating weight of the film is satisfied. Generally, since the thickness of a lubrication film tends to decrease in a convex portion of a steel sheet with an increase in the surface roughness of the steel sheet, a base steel sheet tends to be exposed due to the lubrication film being scraped off due to sliding between the steel sheet and the die when press forming is performed, which results in a lubricating effect being less likely to be realized. However, by using the technique according to the present invention, since the adhesion of the lubrication film constituents to the die is promoted when sliding is performed, the die is protected even in the case where the roughness of the steel sheet is large, which results in a lubricating capability not being deteriorated.

The range of the coating weight of the film for good press formability is as follows.

In a range in which relational expression (1): $W \geq 0.12 \times Ra^2 + 0.2$ is satisfied by the coating weight per side W ($g/m^2$) of the film and the arithmetic average roughness Ra ($\mu m$) of the steel sheet, it is possible to achieve good press formability. In the case where the relational expression $W < 0.12 \times Ra^2 + 0.2$ is satisfied, since the coating weight of the film is insufficient, it is not possible to sufficiently achieve the effect of protecting the die, which results in good press formability not being achieved.

Here, in the present invention, the expression "arithmetic average roughness Ra" of a steel sheet denotes the arithmetic average roughness of the steel sheet before the film is formed.

It is more preferable that relational expression (2): $W \geq 0.25 \times Ra^2 + 0.2$ be satisfied.

The types of film constituents which mainly contribute to slidability are film constituents existing in the convex portions of a steel sheet which come into contact with a die when press forming is performed. It is considered that there is a tendency for the area of the convex portions of the steel sheet which come into contact with the die to decrease in proportion to $Ra^2$. Therefore, it is considered that, by increasing the coating weight of the film in proportion to $Ra^2$, it is possible to sufficiently achieve an amount of film constituents which contributes to slidability.

It is preferable that the coating weight W of the film be 2.0 g/m² or less. In the case where the coating weight is more than 2.0 g/m², there may be a deterioration in film removability and weldability. It is particularly preferable that the coating weight W of the film be 0.9 g/m² or less. In the case where the coating weight W of the film is 0.9 g/m² or less, film removability is particularly good.

Examples of a method for determining the coating weight of the film include a method in which the difference in the weight of the steel sheet before and after the film is formed is divided by the area and a method in which the film formed on the surface of the steel sheet is completely removed by using an alkali aqueous solution or an organic solvent and in which the difference in the weight of the steel sheet before and after the film is removed is divided by the area.

It is preferable that the arithmetic average roughness Ra of the steel sheet before the film is formed be 0.4 $\mu$m or more and 2.5 $\mu$m or less.

In the case where Ra is less than 0.4 $\mu$m, there may be a case where minute flaws, which may be generated when press forming is performed, are conspicuous, and there may be a case where die galling occurs when press forming is performed.

In the case where the arithmetic average roughness Ra of the steel sheet before the film is formed is more than 2.5 $\mu$m, since there is an increase in coating weight of the film required, there may be an increase in manufacturing costs, and there may be a deterioration in after-coating sharpness.

It is possible to measure the arithmetic average roughness Ra ($\mu$m) of the steel sheet in accordance with JIS B 0633:2001 (ISO 4288:1996). For example, in the case where Ra is more than 0.1 and 2 or less, Ra is determined from a roughness profile measured under the conditions of a cut-off wavelength and sampling length of 0.8 mm and an evaluation length of 4 mm. In the case where Ra is more than 2 and 10 or less, Ra is determined from a roughness profile measured under the conditions of a cut-off wavelength and sampling length of 2.5 mm and an evaluation length of 12.5 mm.

It is more preferable that the steel sheet to be used in the present invention be a steel sheet having a peak count PPI of 120 or more and 220 or less before the film is formed. In the case where the PPI is less than 120, there may be a case where die galling occurs when press forming is performed. In addition, in the case where the PPI is more than 220, there may be a deterioration in after-coating sharpness. Here, the term "peak count PPI" denotes the number of peaks per inch of a sampling length in a roughness profile, where a peak to be counted is defined as a peak which has a height of 0.635 $\mu$m or more with respect to the mean line for a roughness profile and which is adjacent to a valley having a depth of 0.635 $\mu$m or more with respect to the mean line for a roughness profile, and the PPI is determined in accordance with SAE J 911.

Hereafter, the method for manufacturing the steel sheet according to the present invention will be described.

The expression "the method for manufacturing the steel sheet according to the present invention" denotes a method for manufacturing a steel sheet having an organic resin film on the surface thereof, in which the organic resin contains a polyolefin wax having a melting temperature of 120°C or higher and 140°C or lower and an average particle size of 3.0 $\mu$m or less. A paint which is prepared by adding a wax to an organic resin solution or emulsion prepared by dissolving or dispersing an organic resin in a solvent is applied to the surface of a steel sheet and dried. Here, the paint is prepared in such a manner that, where the mass of the solid content of the organic resin is defined as MA, the mass of the solid content of the wax is defined as MB, and C is defined by the equation C = {MB/(MA + MB)} × 100, where C is 10 mass% or more.

It is preferable that the mass fraction of the film constituents (the organic resin and the polyolefin wax) in the paint be 1 mass% or more and 25 mass% or less.

As the solvent of the paint, water or an organic solvent is used.

In the case where the mass fraction of the film constituents, that is, the organic resin and the wax, in the paint is less than 1 mass% or more than 25 mass%, there may be a case where unevenness occurs when painting is performed. Although there is no particular limitation on the method for applying the paint, examples of the method include a method utilizing a roll coater or a bar coater and a method involving spraying, dipping, or brushing. The steel sheet to which the paint has been applied may be dried by using a common method. Examples of the drying method include a method utilizing hot air, an induction heater, or an infrared heater. It is preferable that the maximum end-point temperature of the steel sheet when drying is performed be 60°C or higher and 140°C or lower. In the case where the maximum end-point temperature of the steel sheet when drying is performed is lower than 60°C, it takes a long time to dry the steel sheet, and there may be a case of a deterioration in an antirust capability. In the case where the maximum end-point temperature described above is higher than 140°C, there may be a case where the wax is melted and aggregated to have a large particle size, which may result in a deterioration in lubricating capability.

Also, in the method for manufacturing the steel sheet according to the present invention, in the case where relational expression (1): $W \geq 0.12 \times Ra^2 + 0.2$ is resultantly satisfied by the coating weight per side W (g/m²) of the film and the arithmetic average roughness Ra ($\mu$m) of the steel sheet, it is possible to manufacture a steel sheet having good press formability.

When the above relational expression (1) is not satisfied, as another embodiment of the manufacturing method, the method may further include a process of intentionally changing at least one of the coating weight W (g/m$^2$) or the arithmetic average roughness Ra (μm) of the steel sheet before the paint is applied so that the above relational expression (1) is satisfied. With this, it is possible to exercise control to manufacture a steel sheet having good press formability more certainly.

Examples of a method including such an additional process performed during operation include a method including a process of deciding the coating weight per side W (g/m$^2$) of the film so that the above relational expression (1) is satisfied in accordance with the target value or measured value of the arithmetic average roughness Ra (μm) of the steel sheet and, in the paint application process, adjusting the amount of a paint applied so that the decided coating weight W is achieved. More specifically, after the value of the arithmetic average roughness Ra (μm) of the steel sheet has been substituted into the above relational expression (1), the coating weight per side W (g/m$^2$) of the film is decided so that the obtained relational expression is satisfied. Here, the meaning of the expression "substituting the value of the arithmetic average roughness Ra (μm) of the steel sheet into the above relational expression (1)" includes not only a case where the value is substituted into exactly the same relational expression as the above relational expression (1) but also a case where the value is substituted into an inequality indicating a narrower range within a range in which the above relational expression (1) is always satisfied. By exercising control in such a manner, it is possible to exercise control so that the above relational expression is satisfied, even when the above relational expression is not satisfied because of a large variation in the arithmetic average roughness Ra (μm) of the steel sheet due to the types of steel sheets to be treated continuously being switched from one to another, due to the abrasion of rolls for rolling, or due to other various circumstances, that is, even in the case where it is assumed that the above relational expression is not satisfied because of a particular circumstance as well as in the case where the above relational expression is actually not satisfied.

In the case where the arithmetic average roughness Ra (μm) of the steel sheet is adjusted so that the above relational expression is satisfied, an appropriate known method may be used. That is, in the case where the steel sheet is a hot rolled steel sheet, by adjusting the Si content of the steel sheet to adjust the thickness of scale generated when hot rolling is performed, it is possible to adjust the surface roughness of the steel sheet after scale has been removed by performing pickling. Also, by adjusting the intensity of descaling (process of pulverizing and removing scale with water pressure) when hot rolling is performed, it is possible to adjust the surface roughness of the steel sheet. In the case where the steel sheet is a cold rolled steel sheet, it is possible to adjust the surface roughness of the steel sheet by adjusting rolling load or roll surface roughness when skin pass rolling is performed.

In the description above, although examples of the embodiments in which control is exercised during operation so that relational expression (1) is satisfied have been described, a determination may be made, in advance, before beginning operation as to whether or not the coating weight per side W (g/m$^2$) of the film and the arithmetic average roughness Ra (μm) of the steel sheet satisfy the above relational expression, and, in the case where the relational expression is not satisfied, the manufacturing conditions of the steel sheet may be decided in such a manner that one of the coating weight per side W (g/m$^2$) of the film and the arithmetic average roughness Ra (μm) of the steel sheet is changed in advance. The process of deciding the manufacturing conditions in such a manner may be performed as a process constituting a part of a method for manufacturing the steel sheet or as an independent process.

EXAMPLE 1

Hereafter, the present invention will be described on the basis of examples. Here, the present invention is not limited to the examples below.

Sample materials were prepared by applying the paints having the chemical compositions given in Table 2 with a bar coater to one surface of each of the cold rolled steel sheets having a thickness of 0.8 mm (steel sheet Nos. A to C) and the hot rolled steel sheet having a thickness of 2.0 mm (steel sheet No. D) which had the arithmetic average roughness Ra given in Table 1 and by drying them with an induction heater under a condition in which the maximum end-point temperature of the steel sheets was 80°C to manufacture lubrication-treated steel sheets. Here, each of steel sheet Nos. A to D was an SPCD or an SPHD having a tensile strength of a 270 MPa class.

The coating weight of the film was determined by removing the film of the steel sheet which had been coated with the film and by then dividing the difference in the weight (g) of the steel sheet before and after the film was removed by the area (m$^2$) of the steel sheet.

(1) Method for evaluating press formability (slidability)

To evaluate press formability, the friction coefficient of each of the sample materials was measured by using the method described below.

Fig. 1 is a schematic front view illustrating a friction coefficient measurement apparatus. As illustrated in this figure, a sample 1 for measuring friction coefficient taken from a sample material is fixed on a sample stage 2, and the sample stage 2 is fixed on the upper surface of a slide table 3, which is horizontally movable. A support base 5 for the slide table which has rollers 4 in contact with the lower surface of the slide table 3 and which is vertically movable is placed on the lower surface of the slide table 3, and, as a result of the support base 5 for the slide table being pushed up, a pressing load N by a bead 6 is applied to the sample 1 for measuring friction coefficient. A first load cell 7 for measuring the pressing load N is fixed on the support base 5 for the slide table. A second load cell 8 for measuring sliding resistance F, which is necessary to move the slide table 3 horizontally while the pressing load N described above is applied, is fixed on one end of the slide table 3. Here, as a lubrication oil, a wash oil for press forming PRETON (registered trademark) R352L produced by Sugimura Chemical Industrial Co., Ltd. was applied to the surface of the sample 1 when the test was performed.

Fig. 2 is a schematic perspective view illustrating the shape and dimensions of the bead used. Sliding is performed while the lower surface of the bead 6 is pressed onto the surface of the sample 1. The bead 6 in Fig. 2 has a width of 10 mm and a length in the sliding direction of the sample of 59 mm. The bottoms of both edges in the sliding direction are each constituted by a curved surface with a curvature radius R of 4.5 mm. The lower surface of the bead, onto which the sample is pressed, is a flat surface having a width of 10 mm and a length in the sliding direction of 50 mm.

The test for measuring friction coefficient was performed by using the bead illustrated in Fig. 2 under the conditions of a pressing load N of 400 kgf and a drawing speed of the sample (the horizontal movement speed of the slide table 3) of 20 cm/min. The friction coefficient $\mu$ between the sample material and the bead was calculated by using the equation $\mu = F/N$.

A case where the friction coefficient was 0.119 or less was evaluated as a case of particularly excellent slidability and denoted by ◎, a case where the friction coefficient was more than 0.119 and 0.130 or less was evaluated as a case of good slidability and denoted by o, and a case where the friction coefficient was more than 0.130 was evaluated as insufficient and denoted by ×.

Here, in the case where the evaluation result of press formability (slidability) is denoted by ◎ or o, it is possible to be determined that the steel sheet has excellent press formability even in a portion in which die galling is considered to occur due to high surface pressure even when the steel sheet is subjected to complex forming in which press forming is difficult because of low sliding resistance in a portion at risk of cracking when press forming is performed.

(2) Method for evaluating film removability

Under the assumption that the steel sheet according to the present invention is used for automobile applications, film removability when degreasing is performed was evaluated. To determine the film removability of the steel sheet, the test samples were first subjected to a degreasing treatment by using an alkali degreasing agent FINE CLEANER (registered trademark) E6403 (produced by Nihon Parkerizing Co., Ltd.). In such a treatment, the test specimen was immersed for a predetermined time in a degreasing solution having a degreasing agent concentration of 20 g/L and a temperature of 40°C and then washed with tap water. The surface carbon intensity of the test sample which had been subjected to such a treatment was measured by using an X-ray fluorescence spectrometer, and a film removal ratio was calculated by using the following equation from the measured value of such a surface carbon intensity, a surface carbon intensity which had been measured, in advance, before degreasing was performed, and the surface carbon intensity of the steel sheet before the lubrication treatment was performed.

film removal ratio (%) = [(carbon intensity before degreasing - carbon intensity after degreasing)/(carbon intensity before degreasing - carbon intensity of steel sheet before lubrication treatment)] × 100

The film removability of the steel sheet was evaluated in accordance with the following evaluation criterion on the basis of an immersion time for which the sample had been immersed in the alkali degreasing solution until the film removal ratio defined as above reached 98% or higher. A case of ◎ or ∘ below was determined as a case of good film removability.

◎ (particularly good): 30 seconds or less
∘ (good): more than 30 seconds and 60 seconds or less
△ (insufficient): more than 60 seconds and 120 seconds or less
× (poor): more than 120 seconds

[Table 1]

| Steel Sheet | Ra($\mu$m) |
|---|---|
| A | 0.48 |
| B | 0.78 |

(continued)

| Steel Sheet | Ra($\mu$m) |
|---|---|
| C | 1.48 |
| D | 2.35 |

[Table 2]

| Paint No. | Organic Resin | Wax | | | |
|---|---|---|---|---|---|
| | Type | Type | Proportion of Wax in Film (mass%) | Particle Size ($\mu$m) | Melting Temperature (°C) |
| 1 | Acryl | Polyethylene | 20 | 0.06 | 120 |
| 2 | Acryl | Polyethylene | 20 | 0.05 | 125 |
| 3 | Acryl | Polyethylene | 20 | 0.3 | 125 |
| 4 | Acryl | Polyethylene | 20 | 0.05 | 130 |
| 5 | Acryl | Polyethylene | 20 | 0.15 | 130 |
| 6 | Acryl | Polyethylene | 20 | 0.6 | 132 |
| 7 | Acryl | Polyethylene | 20 | 1.0 | 132 |
| 8 | Acryl | Polyethylene | 20 | 3.0 | 132 |
| 9 | Acryl | Polyethylene | 20 | 0.05 | 135 |
| 10 | Acryl | Polyethylene | 20 | 0.3 | 135 |
| 11 | Acryl | Polyethylene | 20 | 0.06 | 140 |
| 12 | Acryl | Polyethylene | 20 | 0.2 | 95 |
| 13 | Acryl | Polyethylene | 20 | 0.6 | 110 |
| 14 | Acryl | Polyethylene | 20 | 6.0 | 132 |
| 15 | Acryl | Polypropylene | 20 | 0.03 | 146 |
| 16 | Acryl | Polypropylene | 20 | 0.06 | 156 |
| 17 | Acryl | PTFE | 20 | 0.25 | 340 |
| 18 | Acryl | Polyethylene | 5 | 0.05 | 130 |
| 19 | Acryl | Polyethylene | 10 | 0.05 | 130 |
| 20 | Acryl | Polyethylene | 50 | 0.05 | 130 |
| 21 | Acryl | Polyethylene | 60 | 0.05 | 130 |
| 22 | Epoxy | Polyethylene | 20 | 0.05 | 130 |
| 23 | Urethane | Polyethylene | 20 | 0.05 | 130 |
| 24 | Phenol | Polyethylene | 20 | 0.05 | 130 |
| 25 | Vinyl Acetate | Polyethylene | 20 | 0.05 | 130 |
| 26 | Polyester | Polyethylene | 20 | 0.05 | 130 |

[Table 3]

| No. | Steel Sheet No. | Paint No. | Film Coating Weight (g/m$^2$) | Evaluation on Relational Expression (1) | Evaluation on Relational Expression (2) | Evaluation Item | | | Note |
|---|---|---|---|---|---|---|---|---|---|
| | | | | | | Friction Coefficient | | Film Removability | |
| | | | | | | Friction Coefficient | Evaluation | | |
| 1 | B | 1 | 0.90 | ○ | ○ | 0.121 | ○ | ◎ | Example |

(continued)

| No. | Steel Sheet No. | Paint No. | Film Coating Weight (g/m²) | Evaluation on Relational Expression (1) | Evaluation on Relational Expression (2) | Evaluation Item | | | Note |
|---|---|---|---|---|---|---|---|---|---|
| | | | | | | Friction Coefficient | | Film Removability | |
| | | | | | | Friction Coefficient | Evaluation | | |
| 2 | B | 2 | 0.90 | ○ | ○ | 0.112 | ◎ | ◎ | Example |
| 3 | B | 3 | 0.90 | ○ | ○ | 0.111 | ◎ | ◎ | Example |
| 4 | B | 4 | 0.90 | ○ | ○ | 0.110 | ◎ | ◎ | Example |
| 5 | B | 5 | 0.90 | ○ | ○ | 0.106 | ◎ | ◎ | Example |
| 6 | B | 6 | 0.90 | ○ | ○ | 0.116 | ◎ | ◎ | Example |
| 7 | B | 7 | 0.90 | ○ | ○ | 0.117 | ◎ | ◎ | Example |
| 8 | B | 8 | 0.90 | ○ | ○ | 0.120 | ○ | ◎ | Example |
| 9 | B | 9 | 0.90 | ○ | ○ | 0.112 | ◎ | ◎ | Example |
| 10 | B | 10 | 0.90 | ○ | ○ | 0.113 | ◎ | ◎ | Example |
| 11 | B | 11 | 0.90 | ○ | ○ | 0.121 | ○ | ◎ | Example |
| 12 | B | 12 | 0.90 | ○ | ○ | 0.159 | × | ◎ | Comparative Example |
| 13 | B | 13 | 0.90 | ○ | ○ | 0.142 | × | ◎ | Comparative Example |
| 14 | B | 13 | 1.50 | ○ | ○ | 0.132 | × | ○ | Comparative Example |
| 15 | B | 14 | 0.90 | ○ | ○ | 0.139 | × | ◎ | Comparative Example |
| 16 | B | 15 | 0.90 | ○ | ○ | 0.167 | × | ◎ | Comparative Example |
| 17 | B | 16 | 0.90 | ○ | ○ | 0.179 | × | ◎ | Comparative Example |
| 18 | B | 17 | 0.90 | ○ | ○ | 0.168 | × | ◎ | Comparative Example |
| 19 | B | 18 | 0.90 | ○ | ○ | 0.135 | × | ◎ | Comparative Example |
| 20 | B | 19 | 0.90 | ○ | ○ | 0.124 | ○ | ◎ | Example |
| 21 | B | 20 | 0.90 | ○ | ○ | 0.102 | ◎ | ○ | Example |
| 22 | B | 21 | 0.90 | ○ | ○ | 0.104 | ◎ | Δ | Example |
| 23 | B | 22 | 0.90 | ○ | ○ | 0.114 | ◎ | ◎ | Example |
| 24 | B | 23 | 0.90 | ○ | ○ | 0.111 | ◎ | ◎ | Example |
| 25 | B | 24 | 0.90 | ○ | ○ | 0.106 | ◎ | ◎ | Example |
| 26 | B | 25 | 0.90 | ○ | ○ | 0.109 | ◎ | ◎ | Example |
| 27 | B | 26 | 0.90 | ○ | ○ | 0.108 | ◎ | ◎ | Example |
| 28 | B | 4 | 0.20 | × | × | 0.154 | × | ◎ | Comparative Example |
| 29 | B | 4 | 0.30 | ○ | × | 0.124 | ○ | ◎ | Example |
| 30 | B | 4 | 0.40 | ○ | ○ | 0.104 | ◎ | ◎ | Example |
| 31 | B | 4 | 1.50 | ○ | ○ | 0.107 | ◎ | ○ | Example |

(continued)

| No. | Steel Sheet No. | Paint No. | Film Coating Weight (g/m²) | Evaluation on Relational Expression (1) | Evaluation on Relational Expression (2) | Evaluation Item | | Film Removability | Note |
|---|---|---|---|---|---|---|---|---|---|
| | | | | | | Friction Coefficient | | | |
| | | | | | | Friction Coefficient | Evaluation | | |
| 32 | B | 4 | 2.00 | ○ | ○ | 0.110 | ◎ | ○ | Example |
| 33 | B | 4 | 2.50 | ○ | ○ | 0.110 | ◎ | △ | Example |
| 34 | B | - | None | × | × | 0.175 | × | ○ | Comparative Example |

[Table 4]

| No. | Steel Sheet No. | Paint No. | Film Coating Weight (g/m²) | Evaluation on Relational Expression (1) | Evaluation on Relational Expression (2) | Evaluation Item | | Film Removability | Note |
|---|---|---|---|---|---|---|---|---|---|
| | | | | | | Friction Coefficient | | | |
| | | | | | | Friction Coefficient | Evaluation | | |
| 35 | C | 1 | 0.90 | ○ | ○ | 0.128 | ○ | ◎ | Example |
| 36 | C | 2 | 0.90 | ○ | ○ | 0.114 | ◎ | ◎ | Example |
| 37 | C | 3 | 0.90 | ○ | ○ | 0.113 | ◎ | ◎ | Example |
| 38 | C | 4 | 0.90 | ○ | ○ | 0.112 | ◎ | ◎ | Example |
| 39 | C | 5 | 0.90 | ○ | ○ | 0.110 | ◎ | ◎ | Example |
| 40 | C | 6 | 0.90 | ○ | ○ | 0.119 | ◎ | ◎ | Example |
| 41 | C | 7 | 0.90 | ○ | ○ | 0.118 | ◎ | ◎ | Example |
| 42 | C | 8 | 0.90 | ○ | ○ | 0.123 | ○ | ◎ | Example |
| 43 | C | 9 | 0.90 | ○ | ○ | 0.113 | ◎ | ◎ | Example |
| 44 | C | 10 | 0.90 | ○ | ○ | 0.112 | ◎ | ◎ | Example |
| 45 | C | 11 | 0.90 | ○ | ○ | 0.127 | ○ | ◎ | Example |
| 46 | C | 12 | 0.90 | ○ | ○ | 0.167 | × | ◎ | Comparative Example |
| 47 | C | 13 | 0.90 | ○ | ○ | 0.153 | × | ◎ | Comparative Example |
| 48 | C | 13 | 1.50 | ○ | ○ | 0.150 | × | ○ | Comparative Example |
| 49 | C | 14 | 0.90 | ○ | ○ | 0.139 | × | ◎ | Comparative Example |
| 50 | C | 15 | 0.90 | ○ | ○ | 0.178 | × | ◎ | Comparative Example |
| 51 | C | 16 | 0.90 | ○ | ○ | 0.183 | × | ◎ | Comparative Example |
| 52 | C | 17 | 0.90 | ○ | ○ | 0.146 | × | ◎ | Comparative Example |
| 53 | C | 18 | 0.90 | ○ | ○ | 0.167 | × | ◎ | Comparative Example |
| 54 | C | 19 | 0.90 | ○ | ○ | 0.129 | ○ | ◎ | Example |
| 55 | C | 20 | 0.90 | ○ | ○ | 0.113 | ◎ | ○ | Example |

(continued)

| No. | Steel Sheet No. | Paint No. | Film Coating Weight (g/m²) | Evaluation on Relational Expression (1) | Evaluation on Relational Expression (2) | Evaluation Item | | | Note |
|---|---|---|---|---|---|---|---|---|---|
| | | | | | | Friction Coefficient | | Film Removability | |
| | | | | | | Friction Coefficient | Evaluation | | |
| 56 | C | 21 | 0.90 | ○ | ○ | 0.110 | ◎ | △ | Example |
| 57 | C | 22 | 0.90 | ○ | ○ | 0.119 | ◎ | ◎ | Example |
| 58 | C | 23 | 0.90 | ○ | ○ | 0.119 | ◎ | ◎ | Example |
| 59 | C | 24 | 0.90 | ○ | ○ | 0.107 | ◎ | ◎ | Example |
| 60 | C | 25 | 0.90 | ○ | ○ | 0.118 | ◎ | ◎ | Example |
| 61 | C | 26 | 0.90 | ○ | ○ | 0.117 | ◎ | ◎ | Example |
| 62 | C | 4 | 0.40 | × | × | 0.164 | × | ◎ | Comparative Example |
| 63 | C | 4 | 0.50 | ○ | × | 0.127 | ○ | ◎ | Example |
| 64 | C | 4 | 0.80 | ○ | ○ | 0.114 | ◎ | ◎ | Example |
| 65 | C | 4 | 1.50 | ○ | ○ | 0.110 | ◎ | ○ | Example |
| 66 | C | 4 | 2.00 | ○ | ○ | 0.108 | ◎ | ○ | Example |
| 67 | C | 4 | 3.00 | ○ | ○ | 0.107 | ◎ | △ | Example |
| 68 | C | - | None | × | × | 0.178 | × | ○ | Comparative Example |

[Table 5]

| No. | Steel Sheet No. | Paint No. | Film Coating Weight (g/m²) | Evaluation on Relational Expression (1) | Evaluation on Relational Expression (2) | Evaluation Item | | | Note |
|---|---|---|---|---|---|---|---|---|---|
| | | | | | | Friction Coefficient | | Film Removability | |
| | | | | | | Friction Coefficient | Evaluation | | |
| 69 | A | 4 | 0.20 | × | × | 0.167 | × | ◎ | Comparative Example |
| 70 | A | 4 | 0.25 | ○ | × | 0.125 | ○ | ◎ | Example |
| 71 | A | 4 | 0.30 | ○ | ○ | 0.117 | ◎ | ◎ | Example |
| 72 | A | 4 | 0.70 | ○ | ○ | 0.112 | ◎ | ◎ | Example |
| 73 | A | 4 | 1.40 | ○ | ○ | 0.108 | ◎ | ○ | Example |
| 74 | A | 4 | 2.00 | ○ | ○ | 0.109 | ◎ | ○ | Example |
| 75 | A | - | None | × | × | 0.184 | × | ◎ | Comparative Example |
| 76 | D | 4 | 0.70 | × | × | 0.146 | × | ◎ | Comparative Example |
| 77 | D | 4 | 0.90 | ○ | × | 0.127 | ○ | ◎ | Example |
| 78 | D | 4 | 1.30 | ○ | × | 0.124 | ○ | ○ | Example |
| 79 | ○ | 4 | 1.60 | ○ | ○ | 0.116 | ◎ | ○ | Example |
| 80 | D | 4 | 2.00 | ○ | ○ | 0.111 | ◎ | ○ | Example |
| 81 | D | 13 | 0.90 | ○ | × | 0.185 | × | ◎ | Comparative Example |

(continued)

| No. | Steel Sheet No. | Paint No. | Film Coating Weight $(g/m^2)$ | Evaluation on Relational Expression (1) | Evaluation on Relational Expression (2) | Evaluation Item | | | Note |
|---|---|---|---|---|---|---|---|---|---|
| | | | | | | Friction Coefficient | | Film Removability | |
| | | | | | | Friction Coefficient | Evaluation | | |
| 82 | D | 13 | 1.50 | ○ | × | 0.184 | × | ○ | Comparative Example |
| 83 | D | - | None | × | × | 0.174 | × | ○ | Comparative Example |

Regarding Evaluation on Relational Expression (1) and Evaluation on Relational Expression (2) in Tables 3 to 5, a case where the relevant relational expression was satisfied was denoted by ○, and a case where the relevant relational expression was not satisfied was denoted by ×.

As indicated by Tables 3 to 5, all of the steel sheets of the example of the present invention have excellent press formability. On the contrary, the steel sheets of the comparative examples which do not have the technical features according to the present invention were all poor in terms of press formability.

Moreover, it is clarified that, the types of the steel sheets according to the present invention whose coating weight per side W $(g/m^2)$ of the lubrication film satisfied the relational expression $W \geq 0.25 \times Ra^2 + 0.2$, whose wax in the lubrication film had a melting temperature of 125°C or higher and 135°C or lower, and whose wax in the lubrication film had an average particle size of 0.01 $\mu m$ or more and 0.5 $\mu m$ or less were particularly good in terms of press formability.

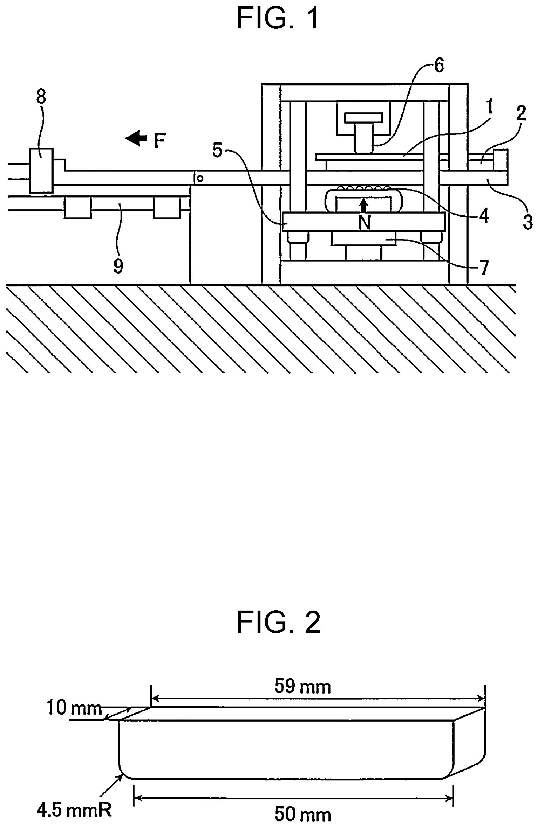

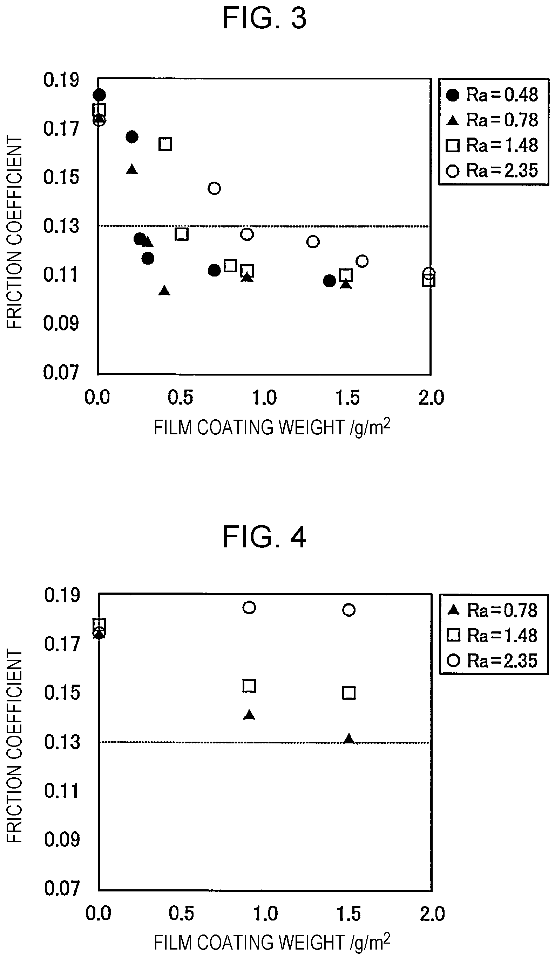

Figs. 3 and 4 are diagrams illustrating the variations in friction coefficient with respect to the coating weight of the lubrication film regarding steel sheets having various values of surface roughness by using some of the results given in Tables 3 to 5. Fig. 3 illustrates the results regarding the paint within the scope of the present invention, and Fig. 4 illustrates the results regarding the paint outside the scope of the present invention.

As illustrated in Fig. 4, in the case of the steel sheets to which the paints outside the scope of the present invention were applied, there was a tendency for the friction coefficient to increase with an increase in the surface roughness of the steel sheet.

On the other hand, as illustrated in Fig. 3, in the case of the steel sheets to which the paints within the scope of the present invention were applied and which satisfied relational expression (1), since the friction coefficient was stably kept low while the surface roughness of the steel sheets varied, it was possible to stably achieve good press formability while there was a variation in the surface roughness of the steel sheets when they were manufactured.

In addition, the evaluation results of the film removability of the steel sheets of the example of the present invention were denoted by ◎ (particularly good) with exceptions of cases where the mass fraction of the wax in the film was 50% or more and/or the coating weight per side W of the lubrication film was more than 0.9 $g/m^2$.

EXAMPLE 2

Sample materials were prepared by applying the paints having the chemical compositions given in Table 2 with a bar coater to the cold rolled steel sheets having a thickness of 0.8 mm (steel sheet Nos. E to H) which had the arithmetic average roughness Ra and peak counts PPI given in Table 6 and by drying them with an induction heater under a condition in which the maximum end-point temperature of the steel sheets was 80°C to manufacture lubrication-treated steel sheets. Here, each of steel sheet Nos. E to H was an SPCD having a tensile strength of a 270 MPa class.

The coating weight of the film was determined by removing the film of the steel sheet which had been coated with the film and by then dividing the difference in the weight of the steel sheet before and after the film was removed by the area of the steel sheet.

(1) Method for evaluating press formability (slidability)

Regarding the evaluation of press formability, the friction coefficient was measured by using the same method as in the case of Example 1, and a case where the friction coefficient was 0.119 or less was determined as a case of particularly excellent slidability and denoted by ◎, a case where the friction coefficient was more than 0.119 and 0.130 or less was determined as a case of good slidability and denoted by ○, and a case where the friction coefficient was more than 0.130 was determined as insufficient and denoted by ×.

(2) Method for evaluating press formability (galling resistance)

The friction coefficient was measured by using the friction coefficient measurement apparatus illustrated in Fig. 1 and the same method as in the case of the evaluation of slidability with exception of the bead shape and the pressing load.

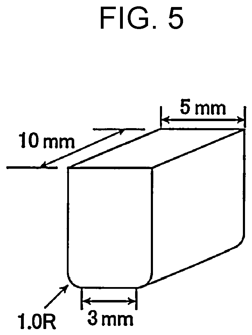

Fig. 5 is a schematic perspective view illustrating the shape and dimensions of the bead used. Sliding is performed while the lower surface of the bead 6 is pressed onto the surface of the sample 1. The bead 6 in Fig. 5 has a width of 10 mm and a length in the sliding direction of the sample of 5 mm. The bottoms of both edges in the sliding direction are each constituted by a curved surface with a curvature radius R of 1.0 mm. The lower surface of the bead, onto which the sample is pressed, is a flat surface having a width of 10 mm and a length in the sliding direction of 3 mm. In the galling test, the friction coefficient was measured by using the bead illustrated in Fig. 5 under the conditions of a pressing load N of 800 kgf and a drawing speed of the sample (the horizontal movement speed of the slide table 3) of 100 cm/min. The friction coefficient $\mu$ between the sample material and the bead was calculated by using the equation $\mu$ = F/N. The same measurement of the friction coefficient was repeatedly performed on one sample, and the galling resistance was evaluated on the basis of the number of repetitions of the sliding test until the friction coefficient exceeds 0.200. A case where such a number of repetitions of the sliding test was 20 or more was determined as a case of excellent galling resistance and denoted by ⊚, and a case where such a number of repetitions of the sliding test was 19 or less was determined as a case of ordinary galling resistance and denoted by o.

[Table 6]

| Steel Sheet | Ra($\mu$m) | PPI |
|---|---|---|
| E | 0.78 | 110 |
| F | 0.78 | 120 |
| G | 0.78 | 170 |
| H | 0.78 | 220 |

[Table 7]

| No. | Steel Sheet No. | Paint No. | Film Coating Weight (g/m²) | Evaluation on Relational Expression (1) | Evaluation on Relational Expression (2) | Evaluation Item | | | | Note |
| | | | | | | Slidability | | Galling Resistance | | |
| | | | | | | Friction Coefficient | Evaluation | Sliding Number | Evaluation | |
|---|---|---|---|---|---|---|---|---|---|---|
| 1 | E | 4 | 0.20 | × | × | 0.149 | × | 13 | ○ | Comparative Example |
| 2 | F | 4 | 0.20 | × | × | 0.151 | × | 15 | ○ | Comparative Example |
| 3 | G | 4 | 0.20 | × | × | 0.154 | × | 16 | ○ | Comparative Example |
| 4 | H | 4 | 0.20 | × | × | 0.155 | × | 18 | ○ | Comparative Example |
| 5 | E | 4 | 0.30 | ○ | × | 0.126 | ○ | 15 | ○ | Example |
| 6 | F | 4 | 0.30 | ○ | × | 0.126 | ○ | 20 | ◎ | Example |
| 7 | G | 4 | 0.30 | ○ | × | 0.128 | ○ | 22 | ◎ | Example |
| 8 | H | 4 | 0.30 | ○ | × | 0.124 | ○ | 24 | ◎ | Example |
| 9 | E | 4 | 0.90 | ○ | ○ | 0.104 | ◎ | 17 | ○ | Example |
| 10 | F | 4 | 0.90 | ○ | ○ | 0.109 | ◎ | 21 | ◎ | Example |
| 11 | G | 4 | 0.90 | ○ | ○ | 0.108 | ◎ | 26 | ◎ | Example |
| 12 | H | 4 | 0.90 | ○ | ○ | 0.108 | ◎ | 29 | ◎ | Example |
| 13 | E | 4 | 2.00 | ○ | ○ | 0.110 | ◎ | 18 | ○ | Example |
| 14 | F | 4 | 2.00 | ○ | ○ | 0.109 | ◎ | 23 | ◎ | Example |
| 15 | G | 4 | 2.00 | ○ | ○ | 0.110 | ◎ | 26 | ◎ | Example |
| 16 | H | 4 | 2.00 | ○ | ○ | 0.111 | ◎ | 30 | ◎ | Example |
| 13 | E | - | None | × | × | 0.173 | × | 8 | ○ | Comparative Example |
| 14 | F | - | None | × | × | 0.174 | × | 11 | ○ | Comparative Example |
| 15 | G | - | None | × | × | 0.175 | × | 15 | ○ | Comparative Example |
| 16 | H | - | None | × | × | 0.174 | × | 17 | ○ | Comparative Example |

EP 4 238 764 B1

Regarding Evaluation on Relational Expression (1) and Evaluation on Relational Expression (2) in Table 7, a case where the relevant relational expression was satisfied was denoted by ∘, and a case where the relevant relational expression was not satisfied was denoted by ✕.

As indicated by Table 7, all of the steel sheets of the example of the present invention have excellent press formability. On the contrary, the steel sheets of the comparative examples which do not have the technical features according to the present invention were all poor in terms of press formability. In addition, in the case where the PPI of the steel sheet of the example of the present invention was 120 or more, the galling resistance was particularly excellent.

Industrial Applicability

Since the steel sheet according to the present invention is excellent in terms of press formability, it is possible to use the steel sheet according to the present invention in a wide field of application mainly including automotive body applications.

Reference Signs List

1     sample for measuring friction coefficient
2     sample stage
3     slide table
4     roller
5     support base for slide table
6     bead
7     first load cell
8     second load cell
9     rail

**Claims**

1. A method for manufacturing a steel sheet comprising a film containing an organic resin and a wax on at least one surface of the steel sheet,

   wherein the organic resin is at least one of an acryl-based resin, an epoxy-based resin, a urethane-based resin, a phenol-based resin, a vinyl acetate-based resin, and a polyester-based resin,
   wherein the wax is a polyolefin wax having a melting temperature of 120°C or higher and 140°C or lower and an average particle size, determined according to the description, of 3.0 $\mu$m or less,
   wherein a proportion of the wax in the film is 10 mass% or more, and
   wherein a coating weight per side W (g/m$^2$) of the film and an arithmetic average roughness Ra ($\mu$m) of the steel sheet, determined according to the description, satisfy relational expression (1) below:

$$W \geq 0.12 \times Ra^2 + 0.2 \cdots (1),$$

   the method comprising applying a paint containing the organic resin and the wax to at least one surface of a steel sheet and drying the paint,
   wherein the method further comprises, before the paint is applied, a process of changing at least one of the coating weight W (g/m$^2$) or the arithmetic average roughness Ra ($\mu$m) of the steel sheet so that the above relational expression (1) is satisfied, when the above relational expression (1) is not satisfied.

2. The method for manufacturing the steel sheet according to Claim 1, wherein a maximum end-point temperature of the steel sheet when drying is performed is 60°C or higher and 140°C or lower.

3. The method for manufacturing the steel sheet according to Claim 1 or 2, wherein a proportion of the organic resin and the wax in the paint is 1 mass% or more and 25 mass% or less.

4. The method for manufacturing the steel sheet according to any one of Claims 1 to 3, the method further comprising a process of deciding the coating weight per side W (g/m$^2$) of the film so that the above relational expression (1) is satisfied in accordance with the target value or measured value of the arithmetic average roughness Ra ($\mu$m) of the steel sheet and, in the paint application process, adjusting the amount of the paint applied so that the decided coating weight W is achieved.

5. The method for manufacturing the steel sheet according to any one of Claims 1 to 4, the method further comprising, after the value of the arithmetic average roughness Ra ($\mu$m) of the steel sheet has been substituted into the above relational expression (1), deciding the coating weight per side W (g/m$^2$) of the film so that the obtained relational expression is satisfied.

6. The method for manufacturing the steel sheet according to Claim 5, wherein the meaning of the expression "substituting the value of the arithmetic average roughness Ra ($\mu$m) of the steel sheet into the above relational expression (1)" includes not only a case where the value is substituted into exactly the same relational expression as the above relational expression (1) but also a case where the value is substituted into an inequality indicating a narrower range within a range in which the above relational expression (1) is always satisfied.

7. The method for manufacturing the steel sheet according to any one of Claims 1 to 6, the method further comprising adjusting the arithmetic average roughness Ra ($\mu$m) of the steel sheet so that the above relational expression (1) is satisfied by:

in the case where the steel sheet is a hot rolled steel sheet, adjusting the Si content of the steel sheet to adjust the thickness of scale generated when hot rolling is performed or adjusting the intensity of descaling when hot rolling is performed; or
in the case where the steel sheet is a cold rolled steel sheet, adjusting rolling load or roll surface roughness when skin pass rolling is performed.

8. A method of determining manufacturing conditions for manufacturing a steel sheet comprising a film containing an organic resin and a wax on at least one surface of the steel sheet,

wherein the organic resin is at least one of an acryl-based resin, an epoxy-based resin, a urethane-based resin, a phenol-based resin, a vinyl acetate-based resin, and a polyester-based resin,
wherein the wax is a polyolefin wax having a melting temperature of 120°C or higher and 140°C or lower and an average particle size, determined according to the description, of 3.0 $\mu$m or less, and
wherein a proportion of the wax in the film is 10 mass% or more,
the method comprising:

determining whether or not a coating weight per side W (g/m$^2$) of the film and an arithmetic average roughness Ra ($\mu$m) of the steel sheet, determined according to the description, satisfy relational expression (1) below:

$$W \geq 0.12 \times Ra^2 + 0.2 \cdots (1);$$

and,
in the case where the relational expression (1) is not satisfied, deciding the manufacturing conditions of the steel sheet in such a manner that one of the coating weight per side W (g/m$^2$) of the film and the arithmetic average roughness Ra ($\mu$m) of the steel sheet is changed in advance such that the relational expression (1) is satisfied.

**Patentansprüche**

1. Verfahren zur Herstellung eines Stahlblechs, umfassend einen Film, der ein organisches Harz und ein Wachs enthält, auf mindestens einer Fläche des Stahlblechs,

wobei das organische Harz mindestens eines von einem Harz auf Acrylbasis, einem Harz auf Epoxidbasis, einem Harz auf Urethanbasis, einem Harz auf Phenolbasis, einem Harz auf Vinylacetatbasis und einem Harz auf Polyesterbasis ist,

wobei das Wachs ein Polyolefinwachs ist, das eine Schmelztemperatur von 120 °C oder höher und 140 °C oder niedriger und eine gemäß der Beschreibung bestimmte mittlere Partikelgröße von 3,0 $\mu$m oder weniger aufweist,

wobei ein Anteil des Wachses in dem Film 10 Masse-% oder mehr beträgt und

wobei ein Beschichtungsgewicht pro Seite W (g/m$^2$) des Films und eine arithmetische mittlere Rauigkeit Ra ($\mu$m) des Stahlblechs, bestimmt gemäß der Beschreibung, den nachstehenden relationalen Ausdruck (1) erfüllen:

$$W \geq 0{,}12 \times Ra^2 + 0{,}2 \ \dots \ (1),$$

(1),

wobei das Verfahren Aufbringen eines Anstrichstoffs, der das organische Harz und das Wachs enthält, auf mindestens eine Fläche eines Stahlblechs und Trocknen des Anstrichstoffs umfasst,

wobei das Verfahren ferner vor dem Auftragen des Anstrichstoffs einen Prozess zum Ändern mindestens eines von dem Beschichtungsgewicht W (g/m$^2$) oder der arithmetischen mittleren Rauigkeit Ra ($\mu$m) des Stahlblechs umfasst, sodass der vorstehende relationale Ausdruck (1) erfüllt wird, wenn der vorstehende relationale Ausdruck (1) nicht erfüllt ist.

2. Verfahren zur Herstellung des Stahlblechs nach Anspruch 1, wobei eine maximale Endpunkttemperatur des Stahlblechs beim Durchführen eines Trocknens 60 °C oder höher und 140 °C oder niedriger ist.

3. Verfahren zur Herstellung des Stahlblechs nach Anspruch 1 oder 2, wobei ein Anteil des organischen Harzes und des Wachses in dem Anstrichstoff 1 Masse-% oder mehr und 25 Masse-% oder weniger beträgt.

4. Verfahren zur Herstellung des Stahlblechs nach einem der Ansprüche 1 bis 3, wobei das Verfahren ferner einen Prozess zum Festlegen des Beschichtungsgewichts pro Seite W (g/m$^2$) des Films, sodass der vorstehende relationale Ausdruck (1) gemäß dem Sollwert oder Messwert der arithmetischen mittleren Rauigkeit Ra ($\mu$m) des Stahlblechs erfüllt ist, und bei dem Anstrichstoff-Auftragungsprozess Anpassen der Menge des aufgetragenen Anstrichstoffs, sodass das festgelegte Beschichtungsgewicht W erreicht wird, umfasst.

5. Verfahren zur Herstellung des Stahlblechs nach einem der Ansprüche 1 bis 4, wobei das Verfahren ferner Festlegen des Beschichtungsgewichts pro Seite W (g/m$^2$) des Films, sodass der erlangte relationale Ausdruck erfüllt ist, umfasst, nachdem der Wert der arithmetischen mittleren Rauigkeit Ra ($\mu$m) des Stahlblechs in den vorstehenden relationalen Ausdruck (1) eingesetzt wurde.

6. Verfahren zur Herstellung des Stahlblechs nach Anspruch 5, wobei die Bedeutung des Ausdrucks "Einsetzen des Wertes der arithmetischen mittleren Rauigkeit Ra ($\mu$m) des Stahlblechs in den vorstehenden relationalen Ausdruck (1)" nicht nur einen Fall beinhaltet, in dem der Wert in genau denselben relationalen Ausdruck wie der vorstehende relationale Ausdruck (1) eingesetzt wird, sondern auch einen Fall, in dem der Wert in eine Ungleichung eingesetzt wird, die einen engeren Bereich innerhalb eines Bereichs angibt, in dem der vorstehende relationale Ausdruck (1) immer erfüllt ist.

7. Verfahren zur Herstellung des Stahlblechs nach einem der Ansprüche 1 bis 6, wobei das Verfahren ferner Anpassen der arithmetischen mittleren Rauigkeit Ra (um) des Stahlblechs umfasst, sodass der vorstehende relationale Ausdruck (1) durch Folgendes erfüllt wird:

in dem Fall, in dem das Stahlblech ein warmgewalztes Stahlblech ist, Anpassen des Si-Gehalts des Stahlblechs, um die Dicke von Zunder, der beim Durchführen von Warmwalzen erzeugt wird, anzupassen, oder Anpassen der Intensität des Entzunderns beim Durchführen von Warmwalzen; oder

in dem Fall, in dem das Stahlblech ein kaltgewalztes Stahlblech ist, Anpassen der Walzlast oder Walzoberflächenrauigkeit beim Durchführen von Kaltnachwalzen.

8. Verfahren zum Bestimmen von Herstellungsbedingungen zur Herstellung eines Stahlblechs, umfassend einen Film, der ein organisches Harz und ein Wachs enthält, auf mindestens einer Fläche des Stahlblechs,

wobei das organische Harz mindestens eines von einem Harz auf Acrylbasis, einem Harz auf Epoxidbasis, einem Harz auf Urethanbasis, einem Harz auf Phenolbasis, einem Harz auf Vinylacetatbasis und einem Harz auf Polyesterbasis ist,

wobei das Wachs ein Polyolefinwachs ist, das eine Schmelztemperatur von 120 °C oder höher und 140 °C oder niedriger und eine gemäß der Beschreibung bestimmte mittlere Partikelgröße von 3,0 $\mu$m oder weniger aufweist, und

wobei ein Anteil des Wachses in dem Film 10 Masse-% oder mehr beträgt,

wobei das Verfahren Folgendes umfasst:

Bestimmen, ob ein Beschichtungsgewicht pro Seite W (g/m$^2$) des Films und eine arithmetische mittlere Rauigkeit Ra (um) des Stahlblechs, bestimmt gemäß der Beschreibung, den nachstehenden relationalen Ausdruck (1) erfüllen oder nicht:

$$W \geq 0,12 \times Ra^2 + 0,2 \dots (1);$$

und,

in dem Fall, in dem der relationale Ausdruck (1) nicht erfüllt ist, Festlegen der Herstellungsbedingungen des Stahlblechs in einer solchen Weise, dass eines von dem Beschichtungsgewicht pro Seite W (g/m$^2$) des Films und der arithmetischen mittleren Rauigkeit Ra ($\mu$m) des Stahlblechs im Voraus derart verändert wird, dass der relationale Ausdruck (1) erfüllt wird.

## Revendications

1. Procédé de fabrication d'une tôle d'acier comprenant un film contenant une résine organique et une cire sur au moins une surface de la tôle d'acier,

   dans lequel la résine organique est au moins une résine à base d'acrylique, une résine à base d'époxy, une résine à base d'uréthane, une résine à base de phénol, une résine à base d'acétate de vinyle et une résine à base de polyester,

   dans lequel la cire est une cire polyoléfine ayant une température de fusion de 120 °C ou plus et de 140 °C ou moins et une taille moyenne de particules, déterminée selon la description, de 3,0 $\mu$m ou moins,

   dans lequel la proportion de cire dans le film est de 10 % en masse ou plus, et

   dans lequel un poids de revêtement par côté W (g/m$^2$) du film et une rugosité moyenne arithmétique Ra ($\mu$m) de la tôle d'acier, déterminés selon la description, satisfont à l'expression relationnelle (1) ci-dessous :

   $$W \geq 0,12 \times Ra^2 + 0,2 \dots (1),$$

   le procédé comprenant l'application d'une peinture contenant la résine organique et la cire sur au moins une surface d'une tôle d'acier et le séchage de la peinture,

   dans lequel le procédé comprend également, avant l'application de la peinture, un procédé de modification d'au moins l'un/l'une du poids du revêtement W (g/m$^2$) ou de la rugosité moyenne arithmétique Ra ($\mu$m) de la tôle d'acier, de sorte que l'expression relationnelle ci-dessus (1) soit satisfaite, lorsque l'expression relationnelle ci-dessus (1) n'est pas satisfaite.

2. Procédé de fabrication de la tôle d'acier selon la revendication 1, dans lequel une température maximale de fin de séchage de la tôle d'acier est de 60 °C ou plus et de 140 °C ou moins.

3. Procédé de fabrication de la tôle d'acier selon la revendication 1 ou 2, dans lequel une proportion de résine organique et de cire dans la peinture est de 1 % en masse ou plus et de 25 % en masse ou moins.

4. Procédé de fabrication de la tôle d'acier selon l'une quelconque des revendications 1 à 3, le procédé comprenant également un procédé de détermination du poids de revêtement par côté W (g/m$^2$) du film, de sorte que l'expression relationnelle ci-dessus (1) soit satisfaite conformément à la valeur cible ou à la valeur mesurée de la rugosité moyenne arithmétique Ra ($\mu$m) de la tôle d'acier et, dans le procédé d'application de la peinture, l'ajustement de la quantité de peinture appliquée de sorte que le poids de revêtement W déterminé soit atteint.

5. Procédé de fabrication de la tôle d'acier selon l'une quelconque des revendications 1 à 4, le procédé comprenant également, après que la valeur de la rugosité moyenne arithmétique Ra ($\mu$m) de la tôle d'acier a été substituée dans l'expression relationnelle ci-dessus (1), la détermination du poids du revêtement par côté W (g/m$^2$) du film, de sorte que l'expression relationnelle obtenue soit satisfaite.

6. Procédé de fabrication de la tôle d'acier selon la revendication 5, dans lequel la signification de l'expression « substitution de la valeur de la rugosité moyenne arithmétique Ra (μm) de la tôle d'acier dans l'expression relationnelle ci-dessus (1) » inclut non seulement un cas où la valeur est substituée dans exactement la même expression relationnelle que l'expression relationnelle ci-dessus (1), mais également un cas où la valeur est substituée dans une inégalité indiquant une plage plus étroite dans une plage dans laquelle l'expression relationnelle ci-dessus (1) est toujours satisfaite.

7. Procédé de fabrication de la tôle d'acier selon l'une quelconque des revendications 1 à 6, le procédé comprenant également l'ajustement de la rugosité moyenne arithmétique Ra (μm) de la tôle d'acier, de sorte que l'expression relationnelle ci-dessus (1) soit satisfaite en :

   dans le cas où la tôle d'acier est une tôle d'acier laminée à chaud, ajustant la teneur en Si de la tôle d'acier pour ajuster l'épaisseur de la calamine générée lors du laminage à chaud ou ajuster l'intensité du décalaminage lors du laminage à chaud ; ou
   dans le cas où la tôle d'acier est une tôle d'acier laminée à froid, ajustant la charge de laminage ou la rugosité de la surface du rouleau lors du laminage de finition.

8. Procédé de détermination des conditions de fabrication d'une tôle d'acier comprenant un film contenant une résine organique et une cire sur au moins une surface de la tôle d'acier,

   dans lequel la résine organique est au moins une résine à base d'acrylique, une résine à base d'époxy, une résine à base d'uréthane, une résine à base de phénol, une résine à base d'acétate de vinyle et une résine à base de polyester,
   dans lequel la cire est une cire polyoléfine ayant une température de fusion de 120 °C ou plus et de 140 °C ou moins et une taille moyenne de particules, déterminée selon la description, de 3,0 μm ou moins, et
   dans lequel la proportion de cire dans le film est de 10 % en masse ou plus,
   le procédé comprenant :

   la détermination de savoir si un poids de revêtement par côté W (g/m$^2$) du film et une rugosité moyenne arithmétique Ra (μm) de la tôle d'acier, déterminés selon la description, satisfont ou non à l'expression relationnelle (1) ci-dessous :

$$W \geq 0{,}12 \times Ra^2 + 0{,}2 \dots (1) \; ;$$

   et,
   dans le cas où l'expression relationnelle (1) n'est pas satisfaite, la détermination des conditions de fabrication de la tôle d'acier de telle sorte que l'un/l'une du poids de revêtement par côté W (g/m$^2$) du film et de la rugosité moyenne arithmétique Ra (μm) de la tôle d'acier soit modifié à l'avance, de sorte que l'expression relationnelle (1) soit satisfaite.

# FIG. 1

# FIG. 2

## FIG. 3

## FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3385344 A1
- JP 10052881 A
- JP 2000309747 A
- JP 2000167981 A